# FASCICULE DE BREVET EUROPEEN

(11) **EP 3 242 146 B1**
(45) Date de publication et mention de la délivrance du brevet: **13.11.2019**
(21) Numéro de dépôt: 16168392.5
(22) Date de dépôt: 04.05.2016
(51) Int. Cl.: G01S 11/08, H04L 27/10, H04L 7/04, H04L 27/156, H04B 1/69

(54) **PROCÉDÉ ET SYSTÉME DE COMMUNICATION DE SIGNAUX À HAUTE SENSIBILITÉ ET À DÉMODULATION SYNCHRONE**
VERFAHREN UND SYSTEM ZUR KOMMUNIKATION VON SIGNALEN MIT HOHER EMPFINDLICHKEIT UND SYNCHRONER DEMODULATION
METHOD AND SYSTEM FOR COMMUNICATING HIGH-SENSITIVITY SIGNALS WITH SYNCHRONOUS DEMODULATION

(43) Date de publication de la demande: 08.11.2017
(73) Titulaire: The Swatch Group Research and Development Ltd., 2074 Marin (CH)
(72) Inventeur: Casagrande, Arnaud, 2014 Bôle (CH)
(74) Mandataire: Giraud, Eric

(56) Documents cités:
- WO-A1-00/31899
- CN-B- 102 724 155
- US-A- 4 037 159
- US-A1- 2013 129 026

## Description

### Domaine de l'invention

L'invention concerne un procédé de communication de signaux à haute sensibilité et à démodulation synchrone.

L'invention concerne également un système de communication pour la mise en œuvre du procédé de communication de signaux à haute sensibilité et à démodulation synchrone.

### Arrière-plan de l'invention

Dans un système de communication de données ou commandes, il peut être recherché de réaliser une communication à bas débit en utilisant un étalement du spectre de transmission. Ceci permet d'optimiser la résistance du système de communication à différents perturbateurs. De préférence, le système de communication peut se baser sur une modulation à étalement du spectre du type "chirp". Le signal chirp est par définition un signal pseudo-périodique modulé en fréquence autour d'une fréquence porteuse. Généralement, la fréquence de ce signal chirp varie linéairement par rapport à la fréquence porteuse entre une valeur basse et une valeur haute de la bande de fréquences. Une première demi-période de ce signal peut être avec une pente positive de variation linéaire de fréquence, alors qu'une seconde demi-période successive de ce signal peut être avec une pente négative de variation linéaire de fréquence.

On peut citer à ce titre la demande de brevet US 2014/0064337 A1, qui décrit un procédé de synchronisation d'un récepteur sur la base d'un signal chirp transmis par un émetteur. Le signal d'horloge du récepteur a besoin d'être synchronisé au signal d'horloge de l'émetteur initialement pour effectuer une communication de données. Pour ce faire, le récepteur capte le signal chirp de l'émetteur. Le récepteur est configuré pour recevoir un signal chirp avec au moins un premier gradient de variation de fréquence dans une demi-période, dont l'amplitude est plus grande que 1. Le récepteur comprend un corrélateur adapté pour corréler le premier gradient de variation de fréquence du signal chirp avec un premier signal chirp attendu pour produire un premier jeu de résultats de corrélation. Au moins un premier pic de corrélation au-dessus des autres pics de corrélation est déterminé pour pouvoir estimer l'écart de fréquence et/ou de phase. Une unité d'ajustement est prévue également pour corriger la phase et la fréquence du premier signal chirp du récepteur et ainsi être synchronisé à l'émetteur. Cependant, le récepteur n'effectue pas une transformée discrète de Fourier (Discrète Fourier Transform ou DFT) du signal intermédiaire échantillonné pour pouvoir rapidement trouver les écarts de fréquence ou de phase. Cela constitue donc un inconvénient pour pouvoir faciliter la synchronisation et réduire la consommation générale du récepteur.

La demande de brevet WO 00/31899 A1 décrit un système de communication avec un émetteur transmettant un signal chirp à un récepteur. Dans une phase de synchronisation, l'émetteur transmet des portions de durée déterminée d'un signal chirp avec un signal à fréquence croissante combiné à un signal à fréquence décroissante. Le récepteur capte le signal chirp et le convertit en fréquence par un signal oscillant d'un oscillateur local à l'image du signal chirp dans un premier mélangeur et dans un second mélangeur pour être fournis à deux processeurs FFT, qui déterminent des pics de fréquence. Un processeur de traitement reçoit les signaux des FFT, qui passent encore par une DFT pour la détermination d'une erreur de fréquence et une erreur de phase pour synchroniser le récepteur. Le récepteur comprend des composants fort consommateurs en énergie et ne permet pas d'avoir une rapide synchronisation, ce qui constitue un inconvénient.

### Résumé de l'invention

L'invention a donc pour but de proposer un procédé de communication de signaux à haute sensibilité et à démodulation synchrone palliant les inconvénients de l'état de la technique, en permettant d'avoir une synchronisation simple, basse fréquence et avec une bonne réduction de la consommation électrique.

A cet effet, l'invention concerne un procédé de communication de signaux à haute sensibilité et à démodulation synchrone, qui comprend les caractéristiques mentionnées dans les revendications indépendantes 1 et 2.

Des étapes particulières du procédé sont mentionnées dans les revendications dépendantes 3 à 14.

Un avantage du procédé réside dans le fait que selon une première variante de réalisation, le récepteur permet de convertir en fréquence tout d'abord le signal chirp capté par un signal oscillant de l'oscillateur local du récepteur, qui est à fréquence constante. Cette conversion en fréquence permet d'obtenir un signal intermédiaire, dont la variation de fréquence est similaire à celle du signal chirp capté. Un signal intermédiaire filtré et échantillonné est fourni à une unité logique, qui comprend un ensemble de paires de blocs de transformée discrète de Fourier "chirp", où la base vectorielle de projection possède une caractéristique fréquentielle modulée. Les paires de blocs de transformée discrète de Fourier "chirp" sont déphasées l'une par rapport à l'autre, pour lesquelles chaque base vectorielle des différentes DFT sont déphasées. Toutes les paires DFT travaillent en parallèle à chaque acquisition de données. Suite à une acquisition, des pics au-dessus d'un seuil de bruit sont détectés, ce qui permet de calculer rapidement une moyenne des abscisses de fréquence pour déterminer une erreur de fréquence. Une erreur de phase est aussi déterminée en étant égale à la distance entre un des pics et la moyenne des fréquences des pics détectés.

Un avantage du procédé réside dans le fait que selon une seconde variante de réalisation, le récepteur permet de convertir en fréquence tout d'abord le signal chirp capté par un signal oscillant de l'oscillateur local du récepteur, qui est à fréquence modulée à l'image du signal chirp. Chaque acquisition des données est effectuée entre chaque début et fin d'une période de variation de fréquence du signal chirp dans le récepteur. Le récepteur est prévu pour changer régulièrement la phase de la modulation ou la variation de fréquence de forme triangulaire jusqu'à ce que le signal oscillant fourni par l'oscillateur au mélangeur se rapproche suffisamment de la phase du signal chirp. Pour ce faire, deux transformées discrètes de Fourier sont effectuées dans l'unité logique du récepteur. Une première transformée discrète de Fourier est effectuée pour la pente positive du signal oscillant durant une première portion de la période de variation de fréquence. Une seconde transformée discrète de Fourier est effectuée pour la pente négative du signal oscillant durant une seconde portion de la période de variation de fréquence. Les première et seconde portions de période de variation de fréquence sont de préférence identiques et constituent des demi-périodes de la période de variation de fréquence. Après plusieurs acquisitions, des pics au-dessus d'un seuil de bruit sont déterminés par une unité de traitement reliés aux blocs DFT pour corriger le déphasage du signal oscillant. De plus, une erreur de fréquence, ainsi qu'une erreur de phase sont déterminées comme pour la première variante du procédé de communication.

Avantageusement, la phase de synchronisation selon les première ou seconde variantes du procédé de communication est courte comparativement à la synchronisation de réception de signaux de positionnement GPS.

Avantageusement, les changements importants de fréquence sont opérés principalement de manière continue et en général sans discontinuité majeure. Cela permet donc de limiter efficacement la largeur de bande du synthétiseur de fréquence, qui est utilisé dans l'oscillateur local. Ainsi, le modulateur et démodulateur utilisé pour le synthétiseur de l'oscillateur peut être un modulateur et démodulateur PLL sigma delta simple à basse fréquence comportant une modulation de fréquence à un seul point. Cette topologie de réalisation est particulièrement simple et orientée vers la faible consommation.

De plus, dans le cas précis où la fréquence de l'oscillateur local du récepteur est modulée, les perturbations liées au rayonnement parasite de l'oscillateur local sont efficacement réparties sur une grande largeur de bande en simplifiant de ce fait le design du récepteur.

Avantageusement dans la phase de modulation et démodulation, un codage des données est effectué dans le signal chirp en additionnant à chaque demi-période un offset de fréquence. A titre d'exemple dans une première demi-période sur la pente positive de variation de fréquence, il peut être ajouté un offset constant de fréquence pour définir un état logique "1", alors que pour une seconde demi-période sur la pente négative de variation de fréquence, il est retiré un offset constant de fréquence pour définir un état logique "0".

Avantageusement dans la phase de modulation et démodulation, un codage des données peut être prévu avec des pentes fréquentielles asymétriques dans chaque demi-période du signal chirp. Dans chaque demi-période du signal chirp à la suite de la phase de synchronisation, chaque état logique est donc défini par une première pente positive de variation de fréquence suivie par une seconde pente négative de variation de fréquence, qui est différente en valeurs absolues de la première pente positive. Par exemple, un état logique "1" dans une première demi-période du signal chirp est défini par une première pente positive de variation de fréquence plus grande que la seconde pente négative de variation de fréquence en valeurs absolues. Un état logique "0" dans la seconde demi-période du signal chirp est défini par une première pente positive de variation de fréquence plus petite que la seconde pente négative de variation de fréquence en valeurs absolues. Avec ce type de codage des données, il n'y a aucun changement brusque de fréquence, ce qui est avantageux.

A cet effet, l'invention concerne également un système de communication de signaux à haute sensibilité et à démodulation synchrone pour la mise en œuvre du procédé, qui comprend les caractéristiques mentionnées dans les revendications indépendantes 15 et 16.

### Brève description des dessins

Les buts, avantages et caractéristiques du procédé et du système de communication de signaux à haute sensibilité et à démodulation synchrone apparaîtront mieux dans la description suivante par les dessins sur lesquels :
la figure 1 représente un signal à fréquence variable du type chirp, qui peut être transmis par un émetteur du système de communication,
la figure 2 représente le signal de l'émetteur du type chirp et au moins deux acquisitions en série dans le temps dans le récepteur du système de communication selon une première variante du procédé de communication selon l'invention,
la figure 3 représente une première forme d'exécution du système de communication pour la mise en œuvre de la première variante du procédé de communication selon l'invention,
la figure 4 représente un exemple des pics au-dessus d'un seuil de bruit des signaux en sortie d'une paire des m paires de blocs de transformée discrète de Fourier chirp DFT1 et chirp DFT2 de rampes de fréquence positive et négative pour le procédé de communication selon l'invention,
la figure 5 représente plusieurs graphes dans le temps des rampes de fréquence des n vecteurs de projection des transformées discrètes de Fourier DFT1 et DFT2 de type chirp pour le procédé de communication selon l'invention,
la figure 6 représente plusieurs graphes dans le temps de la fréquence du signal chirp transmis par l'émetteur, des acquisitions entre chaque début et fin d'une période du signal chirp dans le récepteur et de la fréquence intermédiaire après conversion dans le récepteur selon une seconde variante du procédé de communication selon l'invention,
la figure 7 représente une seconde forme d'exécution du système de communication pour la mise en œuvre de la seconde variante du procédé de communication selon l'invention,
la figure 8 représente une première variante du signal chirp transmis par l'émetteur pour la phase de synchronisation et la phase de modulation ou démodulation pour le procédé de communication selon l'invention, et
la figure 9 représente une seconde variante du signal chirp transmis par l'émetteur pour la phase de synchronisation et la phase de modulation ou démodulation pour le procédé de communication selon l'invention.

### Description détaillée de l'invention

Dans la description suivante, tous les composants du système de communication notamment pour la mise en œuvre du procédé de communication de signaux à haute sensibilité et à démodulation synchrone, qui sont bien connus d'un homme du métier dans ce domaine technique, ne sont décrits que de manière simplifiée.

Pour le procédé de communication, il est effectué principalement deux phases, qui sont une première phase de synchronisation et une seconde phase de démodulation. Une première phase de synchronisation est tout d'abord effectuée avant la transmission de données de l'émetteur. Dans cette première phase, il y a une adaptation de la phase et de la fréquence du signal généré dans un oscillateur local du récepteur par rapport au signal chirp reçu d'un émetteur. Cet oscillateur local comprend un résonateur à quartz en liaison à un synthétiseur de fréquence, qui fournit un signal oscillant notamment pour l'opération de conversion de fréquence du signal chirp capté.

Il est à noter tout d'abord que l'oscillateur local à résonateur à quartz de l'émetteur est similaire à l'oscillateur local à résonateur à quartz du récepteur. Donc la fréquence d'oscillation est sensiblement similaire à ± 40 ppm et il s'agit avant tout d'adapter le déphasage entre les signaux d'émission et de réception, ainsi que l'écart de fréquence entre la variation de fréquence du signal de l'émetteur et celle du récepteur.

Durant la phase de synchronisation, la fréquence exacte et la phase du module d'émission sont donc déterminées. Au terme de cette phase de synchronisation et durant la phase de démodulation, les données transmises par l'émetteur sont reçues par le récepteur. La phase exacte de l'émetteur est suivie pour permettre d'absorber tout écart de fréquence entre le résonateur à quartz de l'émetteur et celui du récepteur.

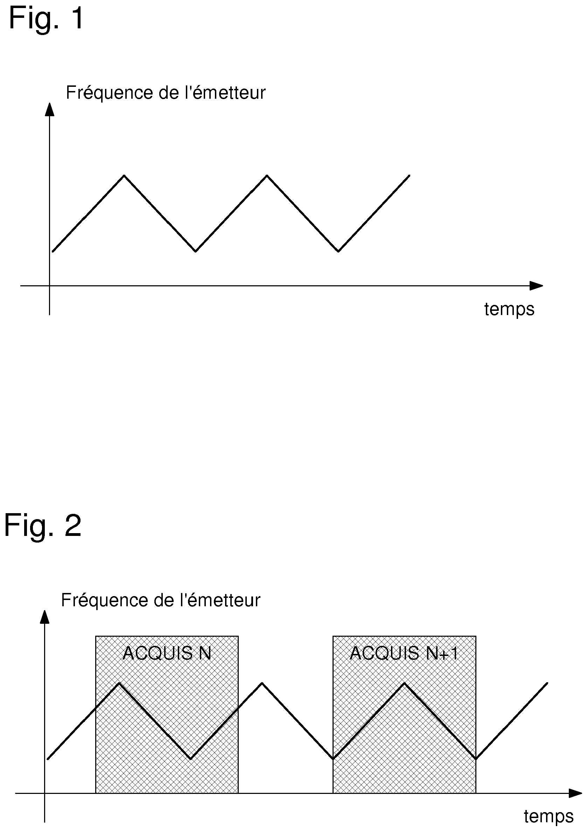

La figure 1 représente de manière simplifiée un signal chirp transmis par un émetteur du système de communication. Ce signal chirp est pseudo-périodique en étant modulé en fréquence autour d'une fréquence porteuse, par exemple de l'ordre de 2.4 GHz, et peut aussi être modulé en amplitude. Dans le cas représenté, il est cherché de préférence une modulation de la fréquence, qui varie linéairement au cours du temps entre une valeur basse de fréquence et une valeur haute de fréquence autour de la fréquence porteuse. La forme de la fréquence du signal chirp au cours du temps est triangulaire. L'intervalle entre les valeurs basse et haute, qui peut être de l'ordre de 100 Hz ou plus, définit la bande de fréquences autour de la fréquence porteuse pour une transmission définie à étalement du spectre. Avec une grande largeur de bande des signaux reçus, cela permet d'éviter tous les perturbateurs et encore d'avoir une grande sensibilité des signaux à faible débit reçus, par exemple de l'ordre de 1 kbits/s.

La figure 2 représente le signal chirp à variation de fréquence de forme triangulaire dans le temps et transmis par l'émetteur du système de communication dans la phase de synchronisation du récepteur selon une première variante du procédé de communication. Selon ce cas particulier, la variation de fréquence du signal chirp est linéaire avec une pente croissante positive dans une première demi-période et avec une pente décroissante négative dans une seconde demi-période. La pente positive peut être égale à la pente négative en valeurs absolues, mais peut aussi être différente comme expliqué ci-après notamment lors de la modulation de données. Pour cette première variante du procédé de communication, la fréquence du signal oscillant fourni de l'oscillateur local du récepteur est maintenue constante à un écart de fréquence de la fréquence porteuse du signal chirp reçu.

Comme sommairement représenté pour le procédé de communication selon la première variante, le récepteur est en mesure de procéder à une série d'acquisitions successives ACQUIS N et ACQUIS N+1. Ces deux acquisitions sont chacune de la durée d'une période T de variation de fréquence du signal chirp reçu. Les acquisitions successives sont décalées dans le temps sans synchronisation, c'est-à-dire la temporisation d'acquisitions du signal intermédiaire IF est constamment déphasée.

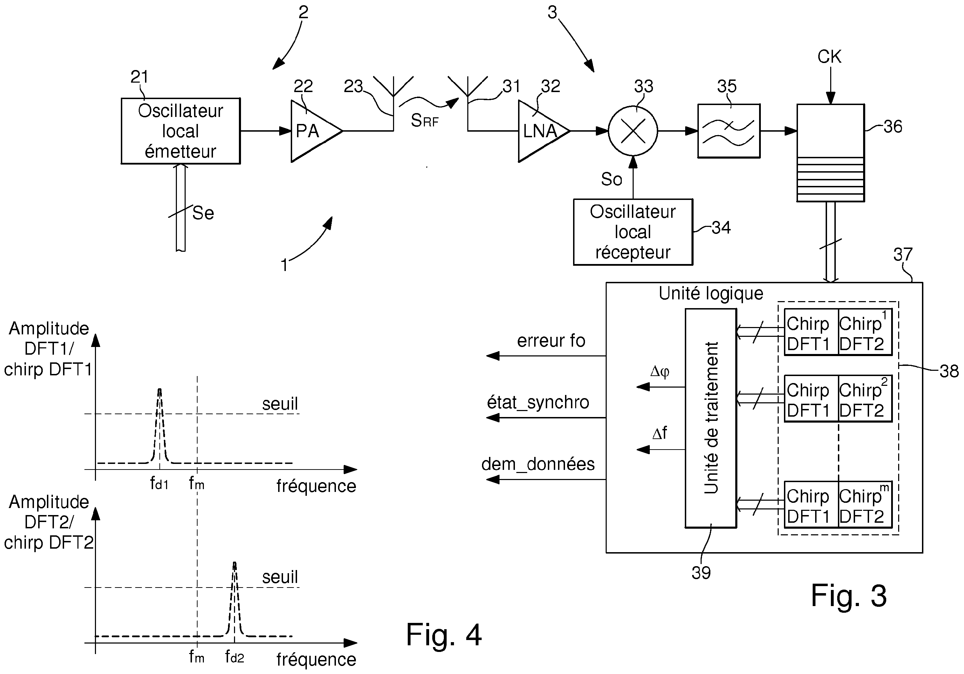

La figure 3 représente justement une première forme d'exécution du système de communication 1 pour la mise en œuvre du procédé de communication selon la première variante de réalisation. Le système de communication 1 comprend tout d'abord au moins un émetteur 2 et au moins un récepteur 3 pour établir une communication de données par des signaux radiofréquences S_{RF} de fréquence porteuse supérieure au MHz et de préférence vers 2.4 GHz.

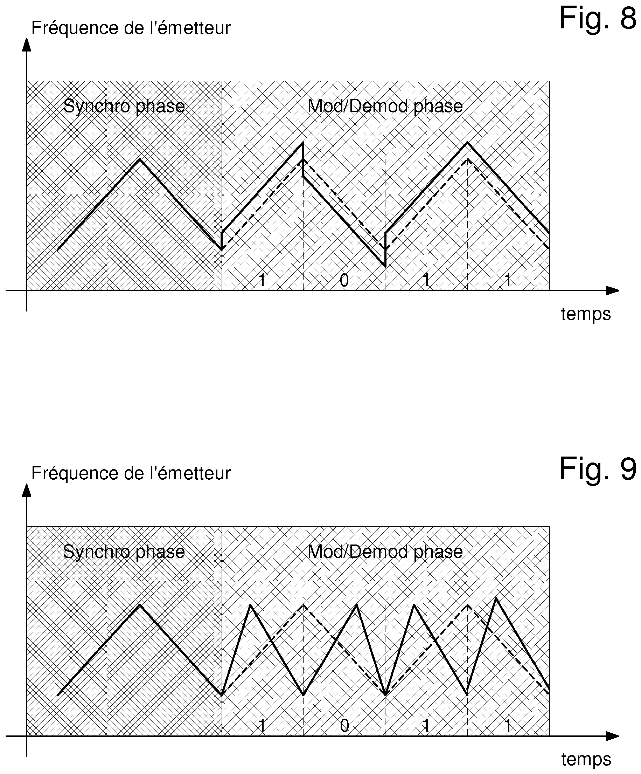

L'émetteur 2 comprend principalement un oscillateur local 21 de l'émetteur, qui peut comprendre un résonateur à quartz en liaison à un synthétiseur de fréquence non représentés pour la modulation en fréquence de données comme expliqué ci-après en référence aux figures 8 et 9. Pour ce faire, l'oscillateur local 21 de l'émetteur reçoit un signal de commande Se pour la génération d'un signal chirp de fréquence porteuse déterminée et par exemple avec une variation de fréquence linéaire de forme triangulaire dans le temps. Le signal chirp passe par un amplificateur PA de sortie 22 pour la transmission d'un signal radiofréquence S_{RF} du type chirp par une antenne 23.

Le récepteur 3 comprend tout d'abord une antenne 31 pour pouvoir recevoir un signal radiofréquence chirp S_{RF} et un amplificateur à faible bruit LNA 32 pour amplifier et filtrer le signal capté à fournir à un mélangeur 33. Une conversion de fréquence est effectuée par le mélangeur 33 avec un signal oscillant So fourni par un oscillateur local 34 du récepteur. Pour cette première forme d'exécution, le signal oscillant fourni par l'oscillateur local 34 est à une fréquence constante de valeur correspondant à un écart de fréquence défini, à la fréquence porteuse du signal radiofréquence chirp capté.

Cet oscillateur local 34 du récepteur peut comprendre, comme pour l'émetteur 2, un résonateur à quartz en liaison à un synthétiseur de fréquence non représentés. Dans ces conditions, le signal intermédiaire IF obtenu en sortie du mélangeur 33 comprend une variation linéaire de fréquence de forme triangulaire tout comme pour le signal chirp capté. Un filtrage de ce signal dans un filtre passe-bas traditionnel 35 est effectué avant d'échantillonner le signal intermédiaire filtré dans un échantillonneur 36. Cet échantillonneur 36 est cadencé par un signal de cadencement CK provenant de l'oscillateur local 34. Ce signal de cadencement CK peut avoir une fréquence par exemple égale à 1.625 MHz provenant de la sortie d'une série de diviseurs non représentés, qui sont reliés à un résonateur à quartz de 26 MHz de l'oscillateur local 34.

Le signal échantillonné provenant de l'échantillonneur 36 est fourni à une unité logique 37, qui a pour but de déterminer une erreur de fréquence, un état de synchronisation, une démodulation des données. Il est notamment contrôlé dans l'unité logique 37 une erreur de phase Δϕ et une erreur de fréquence Δf par rapport au signal chirp capté de manière à synchroniser l'oscillateur du récepteur 3 à celui de l'émetteur 2 et permettre d'effectuer par la suite une démodulation des données.

Dans cette première forme d'exécution, l'unité logique 37 comprend un ensemble 38 de m paires de blocs de transformée discrète de Fourier Chirp DFT1 et Chirp DFT2, qui sont disposées pour un fonctionnement en parallèle. Le nombre m est plus grand ou égal à 1 et il est à noter que plus le nombre m est élevé et plus la phase de synchronisation devient rapide avec moins d'acquisitions successives. Un premier bloc Chirp DFT1 de chaque paire est prévu pour l'acquisition en relation à la pente positive de variation de fréquence du signal chirp capté. Cette acquisition par le premier bloc Chirp DFT1 opère dans une première demi-période de la durée d'une période de variation de fréquence du signal chirp, donc du signal intermédiaire IF. Un second bloc Chirp DFT2 de chaque paire est prévu pour l'acquisition en relation à la pente négative de variation de fréquence du signal chirp capté. Cette acquisition par le second bloc Chirp DFT2 opère dans une seconde demi-période de la durée d'une période de variation de fréquence du signal chirp, donc du signal intermédiaire IF. Ainsi, il est effectué différentes transformées partielles discrètes de Fourier Chirp DFT1 des rampes de fréquence à pente positive et Chirp DFT2 des rampes de fréquence à pente négative.

A la réception du signal intermédiaire échantillonné, chaque bloc Chirp DFT1 et Chirp DFT2 des différentes paires de l'ensemble 38 effectue en parallèle une projection DFT sur un noyau de n vecteurs à rampes de fréquence avec un déphasage temporel défini entre chaque paire DFT. Ces rampes de fréquence sont fonction de la variation de fréquence du signal intermédiaire à l'image du signal chirp.

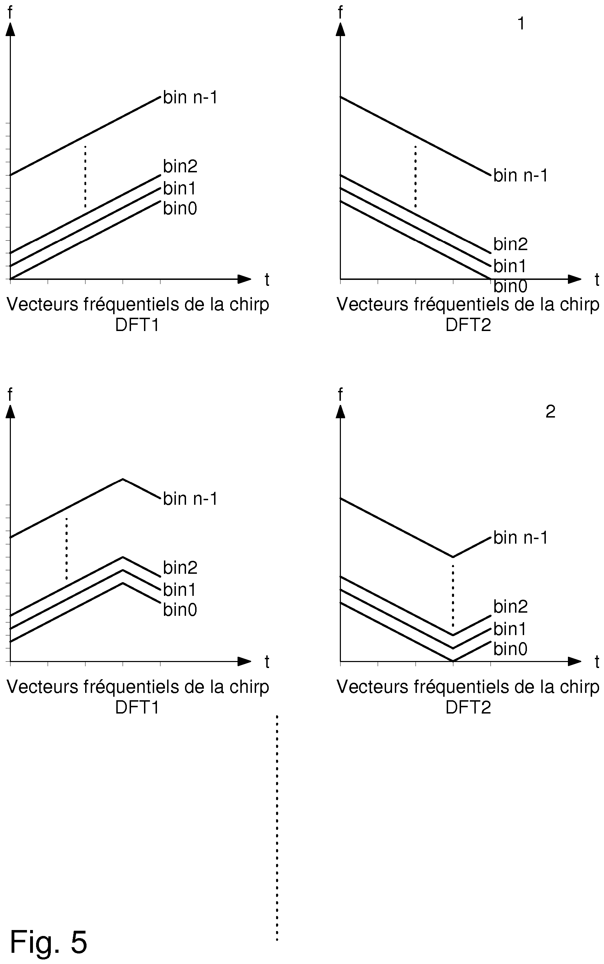

La figure 5 représente justement les rampes de fréquence des n bins de vecteurs de projection sur une demi-période pour le Chirp DFT1 et sur une autre demi-période pour le Chirp DFT2. Le nombre n de bins peut être relativement petit par exemple de l'ordre de 256. Comme on peut le voir, la période de variation de fréquence du signal chirp, donc du signal intermédiaire, pour chaque phase du noyau de la DFT, est divisée en m phases dans le temps correspondant aux m paires de blocs Chirp DFT1 et Chirp DFT2. Les rampes (bins) de la Chirp DFT1 de la pente positive et les rampes de la Chirp DFT2 de la pente négative en phase 1 sont déphasées dans le temps d'une durée T/m par rapport aux rampes (bins) de la Chirp DFT1 de la pente positive et les rampes de la Chirp DFT2 de la pente négative en phase 2. T définit la durée de la période de variation de fréquence du signal chirp et m représente le nombre de paires de l'ensemble 38. Ceci se répète successivement jusqu'à la m^{ième} paire de blocs Chirp DFT1 et Chirp DFT2.

Il est à noter que chaque acquisition successive dans l'échantillonneur 36 est effectuée de telle manière que la phase de modulation du signal chirp reçu est parcourue judicieusement. Ceci permet aux m phases de l'ensemble 38 de parcourir toutes les phases possibles de manière à se rapprocher au mieux de la phase de la modulation de l'émetteur. Plus le nombre m de paires de DFT est faible et plus le nombre d'acquisitions successives est grand. Cela signifie que pour un nombre m égal à 1 ou 2 ou 4, une seule acquisition du signal est insuffisante pour permettre la synchronisation du récepteur, car l'erreur de phase entre la modulation de l'émetteur et la projection locale peut être trop grande.

Comme un déphasage temporel est effectué entre chaque paire de blocs Chirp DFT1 et Chirp DFT2, une des m paires est en mesure de détecter des pics de fréquence au-dessus d'un seuil déterminé comme représenté en figure 4. Comme chaque paire comprend un premier bloc Chirp DFT1 pour la pente positive du signal chirp et un second bloc Chirp DFT2 pour la pente négative du signal chirp, un premier pic à la fréquence fd1 est détecté au-dessus du seuil pour le premier bloc et un second pic à la fréquence fd2 est détecté au-dessus du seuil pour le second bloc. La fréquence fd1 est en dessous d'une fréquence intermédiaire ou moyenne fm, alors que la fréquence fd2 est au-dessus de la fréquence intermédiaire ou moyenne fm.

Entre deux acquisitions ACQUIS N et ACQUIS N+1 successives représentées en figure 2, il y a une phase de calcul pour déterminer des erreurs de fréquence et de phase. Dans la phase de calcul dans une unité de traitement 39 liée aux différentes paires de blocs Chirp DFT1 et Chirp DFT2 de l'ensemble 38, il est déterminé une moyenne de deux abscisses à la fréquence fd1 et fd2 pour déterminer une erreur de fréquence Δf = (fd1 + fd2)/2 fournie en sortie de l'unité logique comme erreur f0. Une erreur de phase Δϕ est aussi déterminée en étant égale à la distance entre un des pics et la moyenne Δf. Cette erreur de phase est Δϕ = |fd1-Δf|= |fd2-Δf|.

Avec cette première variante du procédé de communication et le calcul en parallèle en liaison aux m différents blocs Chirp DFT1 et Chirp DFT2, le temps de synchronisation du récepteur est très court. Par contre, comme plusieurs calculs sont effectués en même temps par toutes les paires, une consommation légèrement supérieure est constatée par rapport à ce qui est décrit pour la seconde variante du procédé de communication ci-dessous.

Bien entendu, l'unité logique 37 est également en mesure de fournir un état de synchronisation comme discuté ci-après lors de la phase de modulation et démodulation, ainsi que des données démodulées. Ces données peuvent être démodulées dans l'unité logique 37 comme ce qui est décrit en relation aux figures 1 et 2 de la demande de brevet EP 2 469 783 A1, qui est citée et incorporée ici comme référence.

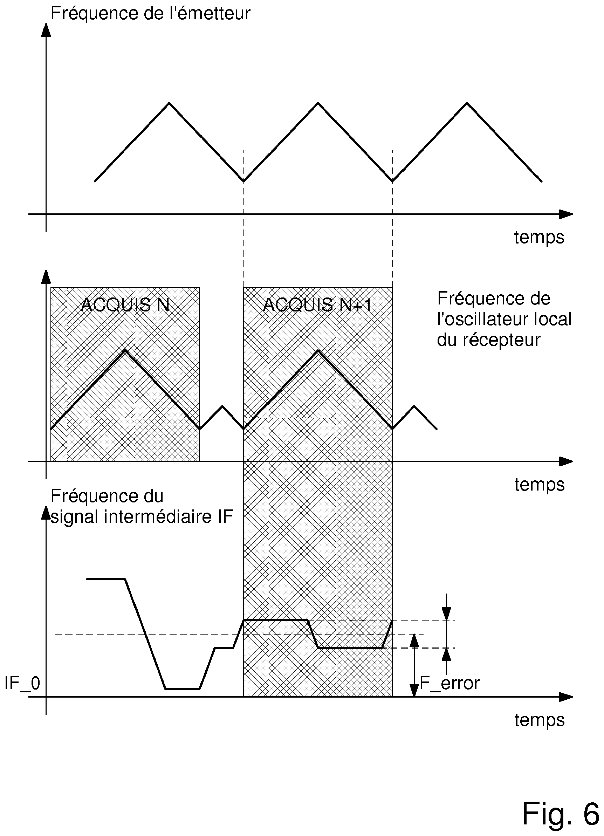

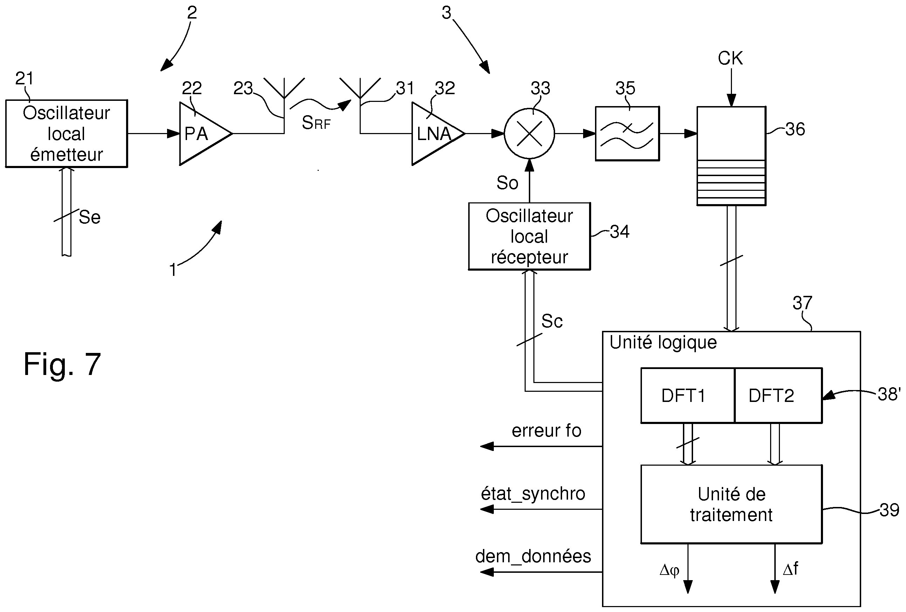

Une seconde variante du procédé de communication est expliquée en référence aux figures 6 et 7. Sur la figure 6, il est représenté dans la phase de synchronisation plusieurs graphes dans le temps de la variation de fréquence du signal chirp transmis par l'émetteur, des acquisitions entre chaque début et fin d'une période de variation de fréquence du signal chirp dans le récepteur et de la fréquence intermédiaire après conversion dans le récepteur. Il est à noter que selon la seconde forme d'exécution du système de communication, l'oscillateur local fournit un signal oscillant modulé à l'image du signal chirp de manière à obtenir des fréquences constantes du signal intermédiaire une fois la conversion effectuée après synchronisation.

Le récepteur est prévu pour changer régulièrement la phase de la modulation ou la variation de fréquence de forme triangulaire jusqu'à ce que le signal oscillant fourni par l'oscillateur au mélangeur soit en phase avec le signal chirp. Chaque acquisition de durée T dans le récepteur commence de préférence au début de chaque période à la valeur basse de fréquence et se termine à la fin de ladite période de variation de fréquence à la valeur basse de fréquence. Cependant chaque période de variation de fréquence peut débuter à une valeur haute de fréquence et se terminer au terme de la période à la valeur haute de fréquence. Ainsi, il doit y avoir un déphasage pour la génération du signal oscillant pour débuter une nouvelle acquisition jusqu'à la synchronisation des signaux.

Deux transformées discrètes de Fourier sont effectuées dans l'unité logique du récepteur. Une première transformée discrète de Fourier est effectuée pour la pente positive du signal oscillant durant la première demi-période de variation de fréquence. Une seconde transformée discrète de Fourier est effectuée pour la pente négative du signal oscillant durant la seconde demi-période de variation de fréquence. Lorsqu'un pic supérieur à un seuil de bruit donné est détecté sur chaque résultat des transformées discrètes de Fourier, il est calculé une erreur de fréquence et une erreur de phase entre l'émetteur et le récepteur. Cette erreur de fréquence Δf est égale à la moyenne des abscisses des deux pics détectés au-dessus du seuil défini. L'erreur de phase Δϕ est égale à la distance entre un des pics et la moyenne comme expliqué ci-devant en référence à la figure 4.

Comme on peut le voir sur la figure 6 durant la première acquisition ACQUIS N, le signal oscillant est déphasé du signal chirp, ce qui fait que la fréquence du signal intermédiaire n'est pas constante. Par contre dans la seconde acquisition ACQUIS N+1, le signal oscillant est en phase avec le signal chirp, ce qui fait que sur la première demi-période, la fréquence du signal intermédiaire est constante à une valeur haute, et sur la seconde demi-période, la fréquence du signal intermédiaire est constante à une valeur basse.

Il est à noter que selon cette seconde variante du procédé de communication, il doit y avoir plusieurs acquisitions successives dans le temps pour déterminer et corriger l'erreur de fréquence et l'erreur de phase pour adapter la fréquence de l'oscillateur local du récepteur. Une fois que la phase de synchronisation est terminée, la phase de démodulation peut débuter dans le récepteur.

La figure 7 représente la seconde forme d'exécution du système de communication 1 pour la mise en œuvre du procédé de communication. Comme la majeure partie des composants sont identiques au système de communication décrit en référence à la figure 3, ces composants ne seront pas décrits. Il est principalement décrit les composants de l'unité logique 37 et leur fonction.

L'unité logique 37 reçoit le signal échantillonné provenant de l'échantillonneur 36 de manière à déterminer une erreur de fréquence f0, un état de synchronisation, une démodulation des données. Dans l'unité logique 37, il n'est prévu qu'un ensemble 38' à deux blocs de transformée discrète de Fourier DFT1 et DFT2. Comme mentionné ci-dessus, un premier bloc DFT1 effectue une projection DFT sur un noyau de n vecteurs pour la première demi-période d'acquisition de la pente positive de variation de fréquence. Un second bloc DFT2 effectue une projection DFT sur un noyau de n vecteurs pour la seconde demi-période d'acquisition de la pente négative de variation de fréquence. Il est effectué un seul calcul à la fois durant chaque acquisition. Une fois qu'un pic est détecté après chaque bloc DFT1 et DFT2 dans l'unité de traitement 39, il est déterminé l'erreur de fréquence Δf et l'erreur de phase Δϕ comme précédemment indiqué.

Comme susmentionné, les données peuvent être démodulées dans l'unité logique 37 comme ce qui est décrit en relation aux figures 1 et 2 de la demande de brevet EP 2 469 783 A1, qui est citée et incorporée ici comme référence.

Avec cette seconde variante du procédé de communication, le temps de synchronisation du récepteur est plus long que la première variante du procédé de communication. Par contre, une consommation électrique est bien inférieure à la première variante du procédé de communication.

Une fois que le récepteur est synchronisé dans la première variante ou la seconde variante du procédé de communication, la phase de modulation et démodulation peut débuter dans le système de communication selon la première ou seconde forme d'exécution des figures 3 ou 7.

La figure 8 représente une première variante du signal chirp transmis par l'émetteur pour la phase de synchronisation et la phase de modulation ou démodulation pour la première variante ou la seconde variante du procédé de communication. Chaque symbole de données pour la phase de modulation et démodulation peut être défini par un seul état logique "1" ou "0" ou par un mot binaire d'une succession d'états logiques "1" ou "0".

Selon une première variante, il peut être prévu de maintenir constante la fréquence du signal oscillant fourni par l'oscillateur local du récepteur comme pour la première forme d'exécution du système de communication. Cependant il peut être aussi envisagé d'avoir la fréquence du signal oscillant variant comme celle du signal chirp reçu comme pour la seconde forme d'exécution du système de communication.

L'émetteur transmet un signal chirp à fréquence variable linéairement comme représenté à la figure 1 pour la phase de synchronisation. Pour la phase de modulation depuis l'émetteur, un codage des données est effectué dans le signal chirp en additionnant à chaque demi-période un offset de fréquence avec plusieurs valeurs, qui représentent les instants de l'information à transmettre. La phase des données est synchronisée sur celle du signal triangulaire comme représenté sur la figure 8. Dans une première demi-période sur la pente positive de variation de fréquence, il est ajouté un offset constant de fréquence pour définir un état logique "1", alors que pour la seconde demi-période sur la pente négative de variation de fréquence, il est retiré un offset constant de fréquence pour définir un état logique "0". Il peut s'agir d'un même offset de fréquence à ajouter ou à retirer pour définir chaque état logique des données à coder, mais un offset différent peut aussi être envisagé.

La figure 9 représente une seconde variante du signal chirp transmis par l'émetteur pour la phase de synchronisation et la phase de modulation ou démodulation pour la première variante ou la seconde variante du procédé de communication.

Pour ce type de codage, il est prévu des pentes fréquentielles asymétriques dans chaque demi-période du signal chirp pour définir soit un état logique "1", soit un état logique "0". Dans chaque demi-période du signal chirp à la suite de la phase de synchronisation, chaque état logique est donc défini par une première pente positive de variation de fréquence suivie par une seconde pente négative de variation de fréquence, qui est différente en valeurs absolues de la première pente positive.

Comme représenté à la figure 9, l'état logique "1" dans la première demi-période du signal chirp est défini par une première pente positive de variation de fréquence plus grande que la seconde pente négative de variation de fréquence en valeurs absolues. Par contre, l'état logique "0" dans la seconde demi-période du signal chirp est défini par une première pente positive de variation de fréquence plus petite que la seconde pente négative de variation de fréquence en valeurs absolues.

Dans cette seconde variante de codage des données, on note que l'adaptation de fréquence pour le codage des données s'effectue sans sauts de fréquence. Cela permet d'utiliser un modulateur à verrouillage de phase PLL à 1 point, qui est facile à mettre en œuvre en réduisant également la consommation dans le système de communication.

Avec une fréquence constante du signal oscillant récepteur peut procéder à une seule acquisition par symbole transmis. Dans l'unité logique, le récepteur peut projeter le vecteur reçu sur n types de vecteurs attendus. Afin de suivre précisément la phase de l'émetteur, 3·n projections sont effectuées en parallèle à savoir une projection "tôt", une projection "actuelle" et une projection "tard". La phase des acquisitions est corrigée pour obtenir le maximum d'énergie de projection sur la phase centrale "actuelle".

Selon une autre variante de réalisation, la fréquence du signal oscillant fourni par l'oscillateur local du récepteur est modulée. Dans ce cas, la modulation illustrée sur la figure 8 peut avantageusement être utilisée. Le récepteur procède à une seule acquisition par symbole transmis et projette le vecteur reçu sur n types de vecteurs attendus. Comme dans ce cas, le vecteur attendu correspond à un signal sinusoïdal de fréquence déterminée, où les fréquences centrales de l'émetteur et du récepteur sont verrouillées, la projection correspond au calcul de la DFT sur un seul bin de valeur bien déterminée.

Il peut aussi au cours du temps y avoir un certain décalage en phase et fréquence entre l'émetteur et le récepteur. Pour suivre précisément la phase de l'émetteur, trois projections sont effectuées en parallèle à savoir une projection "tôt", une projection "actuelle" et une projection "tard". La phase du signal triangulaire de modulation de l'oscillateur local est corrigée pour obtenir le maximum d'énergie de projection sur la phase centrale "actuelle". Un contrôle de l'énergie dans les trois phases est effectué pour suivre la phase du signal chirp reçu. Cela se passe au terme de la phase de synchronisation ou juste avant ou également pendant la phase de modulation et démodulation des signaux.

Bien entendu, il est tout à fait convenable de concevoir un émetteur-récepteur pour la transmission d'un signal chirp à modulation de fréquence et pour la réception d'un autre signal chirp. Chaque émetteur-récepteur peut opérer selon les première et seconde variantes du procédé de communication mentionnées ci-dessus.

A partir de la description qui vient d'être faite, plusieurs variantes du procédé et système de communication peuvent être conçues par l'homme du métier sans sortir du cadre de l'invention définie par les revendications. La modulation des données peut être effectuée pour chaque état logique selon la durée de la période du signal chirp plutôt que sur chaque demi-période. La pente positive de variation de fréquence du signal chirp peut être plus grande ou plus petite que la pente négative en valeurs absolues de variation de fréquence du signal chirp. Le codage des données peut être prévu avec des pentes fréquentielles asymétriques dans chaque période de variation de fréquence du signal chirp. Il peut être prévu pour la modulation des données d'effectuer une modulation d'amplitude dans le signal chirp transmis.

## Revendications

1. Procédé de communication de signaux à haute sensibilité et à démodulation synchrone dans un système de communication (1), qui comprend au moins un émetteur (2) pour la transmission d'un signal de type chirp pseudo-périodique de période T et au moins un récepteur (3) pour recevoir le signal chirp, l'émetteur comprenant un oscillateur local (21) de l'émetteur pour générer un signal chirp à transmettre et le récepteur comprenant un oscillateur local (34) du récepteur adapté à générer un signal oscillant (So) pour la conversion en fréquence du signal chirp reçu par un mélangeur (33) pour fournir un signal intermédiaire (IF),
le procédé étant **caractérisé en ce qu'**il comprend une phase de synchronisation suivie par une phase de modulation ou démodulation d'un signal de données,
**en ce que** dans la phase de synchronisation, l'émetteur (2) transmet un signal chirp, qui est composé dans chaque période T de variation linéaire de fréquence, d'une première portion de période avec une pente positive de variation linéaire de fréquence, et d'une seconde portion de période successive avec une pente négative de variation linéaire de fréquence,
**en ce que** le récepteur (3) reçoit le signal chirp et convertit la fréquence de ce signal chirp dans le mélangeur (33) au moyen du signal oscillant (So) généré par l'oscillateur local (34) du récepteur afin de produire le signal intermédiaire (IF), la fréquence du signal oscillant étant constante de manière que la variation de fréquence du signal intermédiaire est l'image de la variation de fréquence du signal chirp,
**en ce qu'**un signal intermédiaire filtré et échantillonné est fourni à une unité logique (37) du récepteur, qui comprend un ensemble (38) de m paires de blocs de transformée discrète de Fourier DFT (Chirp DFT1; Chirp DFT2) disposées pour un fonctionnement en parallèle et déphasées l'une par rapport à l'autre, où m est un nombre entier plus grand ou égal à 1, un premier bloc de chaque paire étant destiné à l'acquisition en relation à la pente positive de variation de fréquence du signal chirp, alors qu'un second bloc de chaque paire est destiné à l'acquisition en relation à la pente négative de variation de fréquence du signal chirp, et
**en ce qu'**une unité de traitement (39) de l'unité logique (37) reçoit le résultat de chaque transformée discrète de Fourier des paires de l'ensemble (38) suite à au moins une acquisition du signal chirp, et détermine une erreur de fréquence et/ou une erreur de phase entre l'émetteur et le récepteur sur la base de deux pics détectés par au moins une paire de l'ensemble (38) au-dessus d'un seuil de bruit défini pour synchroniser le récepteur avant la phase de démodulation des données.

2. Procédé de communication de signaux à haute sensibilité et à démodulation synchrone dans un système de communication (1), qui comprend au moins un émetteur (2) pour la transmission d'un signal de type chirp pseudo-périodique de période T et au moins un récepteur (3) pour recevoir le signal chirp, l'émetteur comprenant un oscillateur local (21) de l'émetteur pour générer un signal chirp à transmettre et le récepteur comprenant un oscillateur local (34) du récepteur adapté à générer un signal oscillant (So) pour la conversion en fréquence du signal chirp reçu par un mélangeur (33) pour fournir un signal intermédiaire (IF),
le procédé étant **caractérisé en ce qu'**il comprend une phase de synchronisation suivie par une phase de modulation ou démodulation d'un signal de données,
**en ce que** dans la phase de synchronisation, l'émetteur (2) transmet un signal chirp, qui est composé dans chaque période T de variation linéaire de fréquence de forme triangulaire dans le temps, d'une première portion de période avec une pente positive de variation linéaire de fréquence, et d'une seconde portion de période successive avec une pente négative de variation linéaire de fréquence,
**en ce que** le récepteur (3) reçoit le signal chirp et convertit la fréquence de ce signal chirp dans le mélangeur (33) au moyen du signal oscillant (So) généré par l'oscillateur local (34) du récepteur afin de produire le signal intermédiaire (IF), la fréquence du signal oscillant variant de manière similaire à la variation de fréquence du signal chirp,
**en ce qu'**un signal intermédiaire filtré et échantillonné dans un échantillonneur (36) cadencé par un signal de cadencement (CK) fourni par l'oscillateur local (34) du récepteur, est fourni à une unité logique (37) du récepteur, qui comprend une paire (38') de blocs de transformée discrète de Fourier DFT (DFT1; DFT2), un premier bloc de la paire étant destiné à l'acquisition en relation à la pente positive de variation de fréquence du signal chirp, alors qu'un second bloc de la paire est destiné à l'acquisition en relation à la pente négative de variation de fréquence du signal chirp, et
**en ce qu'**une unité de traitement (39) de l'unité logique (37) reçoit le résultat des transformées discrètes de Fourier des blocs de la paire (38') pour corriger le déphasage du signal oscillant (So) généré par l'oscillateur local (34) après plusieurs acquisitions successives du signal chirp, jusqu'à la détection par la paire de blocs DFT (38') de deux pics au-dessus d'un seuil de bruit défini pour déterminer une erreur de fréquence et/ou une erreur de phase entre l'émetteur et le récepteur pour synchroniser le récepteur avant la phase de démodulation des données.

3. Procédé selon l'une des revendications 1 et 2, **caractérisé en ce que** les première et seconde portions de période de variation de fréquence du signal chirp sont identiques et constituent des première et seconde demi-périodes de la période de variation de fréquence.

4. Procédé selon l'une des revendications 1 et 2, **caractérisé en ce que** la durée de chaque acquisition de données du signal chirp capté par le récepteur (3) est égale à la période T de la variation de fréquence du signal chirp.

5. Procédé selon la revendication 1, **caractérisé en ce que** plusieurs acquisitions successives du signal chirp capté sont effectuées dépendant du nombre m de paires de blocs DFT, pour lequel plus le nombre m de paires de blocs DFT est faible et plus le nombre d'acquisitions successives est grand pour la phase de synchronisation du récepteur, et **en ce que** la temporisation d'acquisition de données du signal chirp capté par le récepteur (3) est constamment déphasée et de durée égale à la période T de la variation de fréquence du signal chirp.

6. Procédé selon la revendication 1, **caractérisé en ce que** les paires de blocs DFT (Chirp DFR1 ; Chirp DFT2) sont déphasées l'une de l'autre dans le temps d'une durée T/m.

7. Procédé selon la revendication 2, **caractérisé en ce que** chaque acquisition de données du signal chirp capté par le récepteur (3) débute à une valeur basse de fréquence ou à une valeur haute de fréquence de variation de fréquence du signal chirp, et est d'une durée égale à la période T de variation de fréquence du signal chirp.

8. Procédé selon l'une des revendications 1 et 2, **caractérisé en ce qu'**une erreur de fréquence est déterminée dans l'unité de traitement (39) sur la base de la moyenne des deux pics détectés au-dessus du seuil de bruit.

9. Procédé selon la revendication 8, **caractérisé en ce qu'**une erreur de phase est déterminée sur la base de la distance entre un des pics détectés et la moyenne des fréquences des pics détectés.

10. Procédé selon l'une des revendications 1 et 2, **caractérisé en ce qu'**une phase de calcul de l'erreur de phase et de l'erreur de calcul débute au terme d'une phase d'acquisition et avant le début d'une acquisition successive.

11. Procédé selon l'une des revendications 1 et 2, **caractérisé en ce qu'**au terme de la phase de synchronisation, l'émetteur (2) transmet un signal chirp à codage des données, le codage étant réalisé dans chaque période de variation de fréquence en additionnant un offset de fréquence pour définir un état logique "1" ou en soustrayant un offset de fréquence pour définir un état logique "0".

12. Procédé selon la revendication 3, **caractérisé en ce qu'**au terme de la phase de synchronisation, l'émetteur (2) transmet un signal chirp à codage des données, le codage étant réalisé dans chaque demi-période de la période de variation de fréquence en additionnant un offset de fréquence pour définir un état logique "1" ou en soustrayant un offset de fréquence pour définir un état logique "0".

13. Procédé selon l'une des revendications 1 et 2, **caractérisé en ce qu'**au terme de la phase de synchronisation, l'émetteur (2) transmet un signal chirp à codage des données avec des pentes fréquentielles asymétriques dans chaque période de variation de fréquence du signal chirp, un état logique "1" étant défini avec une pente positive de variation de fréquence dans la première portion de période, qui est différente d'une pente négative en valeurs absolues dans la seconde portion de période de variation de fréquence.

14. Procédé selon la revendication 3, **caractérisé en ce qu'**au terme de la phase de synchronisation, l'émetteur (2) transmet un signal chirp à codage des données avec des pentes fréquentielles asymétriques dans chaque demi-période du signal chirp, un état logique "1" étant défini dans une demi-période par une première pente positive de variation de fréquence plus grande qu'une, alors qu'un état logique "0" dans une demi-période du signal chirp est défini par une première pente positive de variation de fréquence plus petite qu'une seconde pente négative de variation de fréquence en valeurs absolues.

15. Système de communication pour la mise en oeuvre du procédé de communication selon la revendication 1,
**caractérisé en ce qu'**il comprend au moins un émetteur (2) pour la transmission d'un signal de type chirp pseudo-périodique de période T et au moins un récepteur (3) pour recevoir le signal chirp, l'émetteur comprenant un oscillateur local (21) de l'émetteur pour générer un signal chirp à transmettre et le récepteur comprenant un oscillateur local (34) du récepteur adapté à générer un signal oscillant (So) à fréquence constante pour la conversion en fréquence du signal chirp reçu par un mélangeur (33) pour fournir un signal intermédiaire (IF) à variation de fréquence à l'image du signal chirp capté,
**en ce qu'**il comprend en outre un filtre passe-bas (35) suivi par un échantillonneur (36) cadencé par un signal de cadencement (CK) fourni par l'oscillateur local (34) du récepteur,
**en ce qu'**il comprend en outre une unité logique (37), qui comprend un ensemble (38) de m paires de blocs de transformée discrète de Fourier DFT (Chirp DFT1; Chirp DFT2) disposées pour un fonctionnement en parallèle et déphasées l'une par rapport à l'autre, où m est un nombre entier plus grand ou égal à 1, un premier bloc de chaque paire étant destiné à l'acquisition en relation à la pente positive de variation de fréquence du signal chirp, alors qu'un second bloc de chaque paire est destiné à l'acquisition en relation à la pente négative de variation de fréquence du signal chirp, et
**en ce que** l'unité logique (37) comprend encore une unité de traitement (39) destinée à recevoir le résultat de chaque transformée discrète de Fourier des paires de l'ensemble (38) pour déterminer une erreur de fréquence et/ou une erreur de phase entre l'émetteur et le récepteur.

16. Système de communication pour la mise en œuvre du procédé de communication selon la revendication 2,
**caractérisé en ce qu'**il comprend au moins un émetteur (2) pour la transmission d'un signal de type chirp pseudo-périodique de période T et de forme triangulaire dans le temps pour une phase de synchronisation, et au moins un récepteur (3) pour recevoir le signal chirp, l'émetteur comprenant un oscillateur local (21) de l'émetteur pour générer un signal chirp à transmettre et le récepteur comprenant un oscillateur local (34) du récepteur adapté à générer un signal oscillant (So) à fréquence constante pour la conversion en fréquence du signal chirp reçu par un mélangeur (33) pour fournir un signal intermédiaire (IF) à variation de fréquence à l'image du signal chirp capté,
**en ce qu'**il comprend en outre un filtre passe-bas (35) suivi par un échantillonneur (36) cadencé par un signal de cadencement (CK) fourni par l'oscillateur local (34) du récepteur,
**en ce qu'**il comprend en outre une unité logique (37), qui comprend une paire (38') de blocs de transformée discrète de Fourier DFT (DFT1; DFT2), un premier bloc de la paire étant destiné à l'acquisition en relation à la pente positive de variation de fréquence du signal chirp, alors qu'un second bloc de la paire est destiné à l'acquisition en relation à la pente négative de variation de fréquence du signal chirp, et
**en ce que** l'unité logique (37) comprend encore une unité de traitement (39) destinée à recevoir le résultat des transformées discrètes de Fourier des blocs de la paire (38') pour corriger le déphasage du signal oscillant (So) généré par l'oscillateur local (34) pour déterminer une erreur de fréquence et/ou une erreur de phase entre l'émetteur et le récepteur.

## Patentansprüche

1. Verfahren zur Kommunikation von Signalen mit hoher Empfindlichkeit und synchroner Demodulation in einem Kommunikationssystem (1), das mindestens einen Sender (2) zur Übertragung eines pseudoperiodischen Signals der Periode T vom Chirp-Typ und mindestens einen Empfänger (3) zum Empfangen des Chirp-Signals umfasst, wobei der Sender einen lokalen Senderoszillator (21) umfasst, um ein zu übertragendes Chirp-Signal zu erzeugen, und der Empfänger einen lokalen Empfängeroszillator (34) umfasst, der geeignet ist, ein Oszillatorsignal (So) für die Frequenzumwandlung des empfangenen Chirp-Signals durch einen Mischer (33) zu erzeugen, um ein Zwischensignal (IF) bereitzustellen,
wobei das Verfahren **dadurch gekennzeichnet ist, dass** es eine Synchronisationsphase umfasst, der eine Modulations- oder Demodulationsphase eines Datensignals folgt,
dass in der Synchronisationsphase der Sender (2) ein Chirp-Signal überträgt, das in jeder Periode T mit linearer Frequenzänderung aus einem ersten Periodenabschnitt mit einer positiven Steigung der linearen Frequenzänderung und aus einem darauf folgenden zweiten Periodenabschnitt mit einer negativen Steigung der linearen Frequenzänderung aufgebaut ist,
dass der Empfänger (3) das Chirp-Signal empfängt und die Frequenz dieses Chirp-Signals in dem Mischer (33) mittels des von dem lokalen Empfängeroszillator (34) erzeugten Oszillatorsignals (So) umwandelt, um das Zwischensignal (IF) zu erzeugen, wobei die Frequenz des Oszillatorsignals konstant ist, derart, dass die Frequenzänderung des Zwischensignals das Bild der Frequenzänderung des Chirp-Signals ist,
dass ein gefiltertes und abgetastetes Zwischensignal einer Logikeinheit (37) des Empfängers zugeführt wird, die eine Anordnung (38) aus m Paaren von Blöcken einer diskreten Fourier-Transformation DFT (Chirp DFT1; Chirp DFT2) umfasst, die für einen parallelen und phasenverschobenen Betrieb des einen relativ zu dem anderen ausgelegt sind, wobei m eine ganze Zahl größer oder gleich 1 ist, wobei ein erster Block jedes Paars zur Erfassung in Bezug auf die positive Steigung der Frequenzänderung des Chirp-Signals bestimmt ist, während ein zweiter Block jedes Paars zur Erfassung in Bezug auf die negative Steigung der Frequenzänderung des Chirp-Signals bestimmt ist, und
dass eine Verarbeitungseinheit (39) der Logikeinheit (37) das Ergebnis jeder diskreten Fourier-Transformation der Paare der Anordnung (38) als Folge mindestens einer Erfassung des Chirp-Signals empfängt und einen Frequenzfehler und/oder einen Phasenfehler zwischen dem Sender und dem Empfänger auf der Basis von zwei Spitzen bestimmt, die durch mindestens ein Paar der Anordnung (38) oberhalb eines Rauschschwellenwertes detektiert werden, der definiert ist, um den Empfänger vor der Demodulationsphase der Daten zu synchronisieren.

2. Verfahren zur Kommunikation von Signalen mit hoher Empfindlichkeit und synchroner Demodulation in einem Kommunikationssystem (1), das mindestens einen Sender (2) zur Übertragung eines pseudoperiodischen Signals der Periode T vom Chirp-Typ und mindestens einen Empfänger (3) zum Empfangen des Chirp-Signals umfasst, wobei der Sender einen lokalen Senderoszillator (21) umfasst, um ein zu übertragendes Chirp-Signal zu erzeugen, und der Empfänger einen lokalen Empfängeroszillator (34) umfasst, der geeignet ist, ein Oszillatorsignal (So) für die Frequenzumwandlung des empfangenen Chirp-Signals durch einen Mischer (33) zu erzeugen, um ein Zwischensignal (IF) bereitzustellen,
wobei das Verfahren **dadurch gekennzeichnet ist, dass** es eine Synchronisationsphase umfasst, der eine Modulations- oder Demodulationsphase eines Datensignals folgt,
dass in der Synchronisationsphase der Sender (2) ein Chirp-Signal überträgt, das in jeder Periode T mit linearer Frequenzänderung mit dreieckiger Form in der Zeit aus einem ersten Periodenabschnitt mit positiver Steigung der linearen Frequenzänderung und aus einem darauf folgenden zweiten Periodenabschnitt mit negativer Steigung der linearen Frequenzänderung aufgebaut ist,
dass der Empfänger (3) das Chirp-Signal empfängt und die Frequenz dieses Chirp-Signals in dem Mischer (33) mittels des durch den lokalen Empfängeroszillator (34) erzeugten Oszillatorsignals (So) umwandelt, um das Zwischensignal (IF) zu erzeugen, wobei sich die Frequenz des Oszillatorsignals auf ähnliche Weise wie die Frequenzänderung des Chirp-Signals ändert,
dass ein Zwischensignal, das gefiltert und in einem Abtaster (36) abgetastet wird, der durch ein von dem lokalen Empfängeroszillator (34) geliefertes Taktsignal (CK) getaktet wird, einer Logikeinheit (37) des Empfängers zugeführt wird, die ein Paar (38') von Blöcken einer diskreten Fourier-Transformation DFT (DFT1; DFT2) umfasst, wobei ein erster Block des Paars zur Erfassung in Bezug auf die positive Steigung der Frequenzänderung des Chirp-Signals bestimmt ist, während ein zweiter Block des Paars zur Erfassung in Bezug auf die negative Steigung der Frequenzänderung des Chirp-Signals bestimmt ist, und
dass eine Verarbeitungseinheit (39) der Logikeinheit (37) das Ergebnis der diskreten Fourier-Transformationen der Blöcke des Paars (38') empfängt, um die Phasenverschiebung des Oszillatorsignals (So), das durch den lokalen Oszillator (34) erzeugt wird, nach mehreren aufeinanderfolgenden Erfassungen des Chirp-Signals bis zur Detektion durch das Paar von DFT-Blöcken (38') von zwei Spitzen oberhalb eines definierten Rauschschwellenwertes zu korrigieren, um einen Frequenzfehler und/oder einen Phasenfehler zwischen dem Sender und dem Empfänger zu bestimmen, um den Empfänger vor der Demodulationsphase der Daten zu synchronisieren.

3. Verfahren nach einem der Ansprüche 1 und 2, **dadurch gekennzeichnet, dass** der erste und der zweite Periodenabschnitt der Frequenzänderung des Chirp-Signals gleich sind und erste und zweite Halbperioden der Periode der Frequenzänderung bilden.

4. Verfahren nach einem der Ansprüche 1 und 2, **dadurch gekennzeichnet, dass** die Dauer jeder Erfassung von Daten des durch den Empfänger (3) erfassten Chirp-Signals gleich der Periode T der Frequenzänderung des Chirp-Signals ist.

5. Verfahren nach Anspruch 1, **dadurch gekennzeichnet, dass** mehrere aufeinanderfolgende Erfassungen des empfangenen Chirp-Signals in Abhängigkeit von der Anzahl m von Paaren von DFT-Blöcken erfolgen, wobei die Anzahl aufeinanderfolgende Erfassungen für die Synchronisationsphase des Empfängers umso größer ist, je kleiner die Anzahl m von Paaren von DFT-Blöcken ist, und dass die Verzögerung der Erfassung von Daten des durch den Empfänger (3) empfangenen Chirp-Signals konstant phasenverschoben ist und die Dauer gleich der Periode T der Frequenzänderung des Chirp-Signals ist.

6. Verfahren nach Anspruch 1, **dadurch gekennzeichnet, dass** die Paare von DFT-Blöcken (Chirp DFT1; Chirp DFT2) relativ zueinander über die Zeit um eine Dauer T/m phasenverschoben sind.

7. Verfahren nach Anspruch 2, **dadurch gekennzeichnet, dass** jede Erfassung von Daten des vom Empfänger (3) empfangenen Chirp-Signals bei einem niedrigen Frequenzwert oder bei einem hohen Frequenzwert der Frequenzänderung des Chirp-Signals beginnt und von einer Dauer gleich der Periode T der Frequenzänderung des Chirp-Signals ist.

8. Verfahren nach einem der Ansprüche 1 und 2, **dadurch gekennzeichnet, dass** ein Frequenzfehler in der Verarbeitungseinheit (39) auf der Basis des Mittelwerts der beiden detektieren Spitzen oberhalb des Rauschschwellenwertes bestimmt wird.

9. Verfahren nach Anspruch 8, **dadurch gekennzeichnet, dass** ein Phasenfehler auf der Basis des Abstands zwischen einer der detektieren Spitzen und dem Mittelwert der Frequenzen der detektierten Spitzen bestimmt wird.

10. Verfahren nach einem der Ansprüche 1 und 2, **dadurch gekennzeichnet, dass** die Phase des Berechnens von Phasenfehlern und Rechenfehlern in der Zeit einer Erfassungsphase und vor dem Beginn einer darauf folgenden Erfassung beginnt.

11. Verfahren nach einem der Ansprüche 1 und 2, **dadurch gekennzeichnet, dass** am Ende der Synchronisationsphase der Sender (2) ein Chirp-Signal mit Datencodierung überträgt, wobei die Codierung in jeder Periode der Frequenzänderung durch Addieren eines Frequenzversatzes, um einen logischen Zustand "1" zu definieren, und durch Subtrahieren eines Frequenzversatzes, um einen logischen Zustand "0" zu definieren, erfolgt.

12. Verfahren nach Anspruch 3, **dadurch gekennzeichnet, dass** am Ende der Synchronisationsphase der Sender (2) ein Chirp-Signal mit Datencodierung überträgt, wobei die Codierung in jeder Halbperiode der Periode der Frequenzänderung durch Addieren eines Frequenzversatzes zum Definieren eines logischen Zustands "1" und durch Subtrahieren eines Frequenzversatzes zum Definieren eines logischen Zustands "0" erfolgt.

13. Verfahren nach einem der Ansprüche 1 und 2, **dadurch gekennzeichnet, dass** am Ende der Synchronisationsphase der Sender (2) ein Chirp-Signal mit Datencodierung mit asymmetrischen Frequenzsteigungen in jeder Periode der Frequenzänderung des Chirp-Signals überträgt, wobei ein logischer Zustand "1" mit einer positiven Steigung der Frequenzänderung in dem ersten Periodenabschnitt definiert ist, der von einer negativen Steigung dem Absolutwert nach in dem zweiten Periodenabschnitt der Frequenzänderung verschieden ist.

14. Verfahren nach Anspruch 3, **dadurch gekennzeichnet, dass** am Ende der Synchronisationsphase der Sender (2) ein Chirp-Signal mit Datencodierung mit asymmetrischen Frequenzsteigungen in jeder Halbperiode des Chirp-Signals überträgt, wobei ein logischer Zustand "1" in einer Halbperiode durch eine erste positive Steigung der Frequenzänderung größer als eins definiert ist, während ein logischer Zustand "0" in einer Halbperiode des Chirp-Signals durch eine erste positive Steigung der Frequenzänderung definiert ist, die kleiner als eine zweite negative Steigung der Frequenzänderung dem Absolutwert nach ist.

15. Kommunikationssystem zur Ausführung des Kommunikationsverfahrens nach Anspruch 1,
**dadurch gekennzeichnet, dass** es mindestens einen Sender (2) zur Übertragung eines pseudoperiodischen Signals der Periode T vom Chirp-Typ und mindestens einen Empfänger (3) zum Empfang des Chirp-Signals umfasst, wobei der Sender einen lokalen Senderoszillator (21) umfasst, um ein zu übertragendes Chirp-Signal zu erzeugen, und der Empfänger einen lokalen Empfängeroszillator (34) umfasst, der geeignet ist, ein Oszillatorsignal (So) mit konstanter Frequenz für die Frequenzumwandlung des empfangenen Chirp-Signals durch einen Mischer (33) zu erzeugen, um ein Zwischensignal (IF) mit einer Frequenzänderung, die das Bild zu jener des empfangenen Chirp-Signals ist, bereitzustellen,
dass es ferner ein Tiefpassfilter (35) umfasst, dem ein Abtaster (36) folgt, der durch ein von dem lokalen Empfängeroszillator (34) bereitgestelltes Taktsignal (CK) getaktet wird,
dass es ferner eine Logikeinheit (37) umfasst, die eine Anordnung (38) von m Paaren von Blöcken einer diskreten Fourier-Transformation DFT (Chirp DFT1; Chirp DFT2) umfasst, die für einen parallelen und phasenverschobenen Betrieb relativ zueinander vorgesehen sind, wobei m eine ganze Zahl größer oder gleich 1 ist, wobei ein erster Block jedes Paares zur Erfassung in Bezug auf die positive Steigung der Frequenzänderung des Chirp-Signals bestimmt ist, während ein zweiter Block jedes Paares zur Erfassung in Bezug auf die negative Steigung der Frequenzänderung des Chirp-Signals bestimmt ist, und
dass die Logikeinheit (37) ferner eine Verarbeitungseinheit (39) umfasst, die dazu bestimmt ist, das Ergebnis jeder diskreten Fourier-Transformation der Paare der Anordnung (38) zu empfangen, um einen Frequenzfehler und/oder einen Phasenfehler zwischen dem Sender und dem Empfänger zu bestimmen.

16. Kommunikationssystem zur Ausführung des Kommunikationsverfahrens nach Anspruch 2,
**dadurch gekennzeichnet, dass** es mindestens einen Sender (2) für die Übertragung eines pseudoperiodischen Signals der Periode T vom Chirp-Typ mit dreieckiger Form in der Zeit einer Synchronisationsphase und mindestens einen Empfänger (3) zum Empfang des Chirp-Signals umfasst, wobei der Sender einen lokalen Senderoszillator (21) zum Erzeugen eines zu übertragenden Chirp-Signals umfasst, und der Empfänger einen lokalen Empfängeroszillator (34) umfasst, der geeignet ist, ein Oszillatorsignal (So) mit konstanter Frequenz für die Frequenzumwandlung des empfangenen Chirp-Signals durch einen Mischer (33) zu erzeugen, um ein Zwischensignal (IF) mit einer Frequenzänderung, die das Bild jener des empfangenen Chirp-Signals ist, bereitzustellen,
dass es ferner ein Tiefpassfilter (35) umfasst, dem ein Abtaster (36) folgt, der durch ein vom lokalen Empfängeroszillator (34) bereitgestelltes Taktsignal (CK) getaktet wird,
dass es ferner eine Logikeinheit (37) umfasst, die ein Paar (38') von Blöcken einer diskreten Fourier-Transformation DFT (DFT1; DFT2) umfasst, wobei ein erster Block des Paars zur Erfassung der positiven Steigung der Frequenzänderung des Chirp-Signals bestimmt ist, während ein zweiter Block des Paars zur Erfassung der negativen Steigung der Frequenzänderung des Chirp-Signals bestimmt ist, und
dass die Logikeinheit (37) ferner eine Verarbeitungseinheit (39) umfasst, die dazu bestimmt ist, das Ergebnis der diskreten Fourier-Transformationen der Blöcke des Paars (38') zu empfangen, um die Phasenverschiebung des durch den lokalen Oszillator (34) erzeugten Oszillatorsignals (So) zu korrigieren, um einen Frequenzfehler und/oder einen Phasenfehler zwischen dem Sender und dem Empfänger zu bestimmen.

## Claims

1. Communication process for high-sensitivity and synchronous demodulation signals in a communication system (1), which comprises at least one transmitter (2) for transmitting a pseudo-periodic chirp-type signal of period T and at least one receiver (3) to receive the chirp signal, wherein the transmitter comprises a local oscillator (21) of the transmitter to generate a chirp signal to be transmitted and the receiver comprises a local oscillator (34) of the receiver suitable for generating an oscillating signal (So) for the frequency conversion of the received chirp signal by a mixer (33) to supply an intermediate signal (IF),
the process being **characterised in that** it comprises a synchronisation phase followed by a modulation or demodulation phase of a data signal,
**in that** in the synchronisation phase, the transmitter (2) transmits a chirp signal, which in each period T of linear frequency variation is composed of a first cycle portion with a positive slope of linear frequency variation and a second successive cycle portion with a negative slope of linear frequency variation,
**in that** the receiver (3) receives the chirp signal and converts the frequency of this chirp signal in the mixer (33) by means of the oscillating signal (So) generated by the local oscillator (34) of the receiver in order to produce the intermediate signal (IF), wherein the frequency of the oscillating signal is constant so that the frequency variation of the intermediate signal is the image of the frequency variation of the chirp signal,
**in that** a filtered and sampled intermediate signal is supplied to a logic unit (37) of the receiver, which comprises an assembly (38) of m pairs of discrete Fourier transform blocks (chirp DFT1; chirp DFT2) arranged for an operation in parallel and phase-shifted in relation to one another, where m is a whole number higher than or equal to 1, wherein a first block of each pair is intended for the acquisition in relation to the positive slope of frequency variation of the chirp signal, whereas a second block of each pair is intended for the acquisition in relation to the negative slope of frequency variation of the chirp signal, and
**in that** a processing unit (39) of the logic unit (37) receives the result of each discrete Fourier transform of the pairs of the assembly (38) following at least one acquisition of the chirp signal and determines a frequency and/or a phase error between the transmitter and the receiver on the basis of two peaks detected by at least one pair of the assembly (38) above a defined noise threshold to synchronise the receiver before the demodulation phase of the data.

2. Communication process for high-sensitivity and synchronous demodulation signals in a communication system (1), which comprises at least one transmitter (2) for transmitting a pseudo-periodic chirp-type signal of period T and at least one receiver (3) to receive the chirp signal, wherein the transmitter comprises a local oscillator (21) of the transmitter to generate a chirp signal to be transmitted and the receiver comprises a local oscillator (34) of the receiver suitable for generating an oscillating signal (So) for the frequency conversion of the received chirp signal by a mixer (33) to supply an intermediate signal (IF),
the process being **characterised in that** it comprises a synchronisation phase followed by a modulation or demodulation phase of a data signal,
**in that** in the synchronisation phase, the transmitter (2) transmits a chirp signal, which in each period T of triangular-shaped frequency variation over time is composed of a first cycle portion with a positive slope of linear frequency variation and a second successive cycle portion with a negative slope of linear frequency variation,
**in that** the receiver (3) receives the chirp signal and converts the frequency of this chirp signal in the mixer (33) by means of the oscillating signal (So) generated by the local oscillator (34) of the receiver in order to produce the intermediate signal (IF), wherein the frequency of the oscillating signal varies in a similar manner to the frequency variation of the chirp signal,
**in that** an intermediate signal filtered and sampled in a sampler (36) clocked by a timing signal (CK) coming from the local oscillator (34) of the receiver, is supplied to a logic unit (37) of the receiver, which comprises a pair (38') of discrete Fourier transform DFT blocks (DFT1; DFT2), wherein a first block of the pair is intended for the acquisition in relation to the positive slope of frequency variation of the chirp signal, whereas a second block of the pair is intended for the acquisition in relation to the negative slope of frequency variation of the chirp signal, and
**in that** a processing unit (39) of the logic unit (37) receives the result of each discrete Fourier transform of the blocks of the pair (38') to correct the phase-shift of the oscillating signal (So) generated by the local oscillator (34) after several successive acquisitions of the chirp signal until detection by the pair of DFT blocks (38') of two peaks above a defined noise threshold to determine a frequency and/or a phase error between the transmitter and the receiver to synchronise the receiver before the demodulation phase of the data.

3. Process according to one of claims 1 and 2, **characterised in that** the first and second portions of the frequency variation cycle of the chirp signal are identical and constitute the first and second half-cycles of the frequency variation cycle.

4. Process according to one of claims 1 and 2, **characterised in that** the duration of each acquisition of data of the chirp signal captured by the receiver (3) is equal to the period T of frequency variation of the chirp signal.

5. Process according to claim 1, **characterised in that** several successive acquisitions of the captured chirp signal are performed depending on the number m of pairs of DFT blocks, for which the lower the number m of pairs of DFT blocks, the higher the number of successive acquisitions for the synchronisation phase of the receiver, and **in that** the time lag of the acquisition of data of the chirp signal captured by the receiver (3) is constantly phase-shifted and of a duration equal to the period T of frequency variation of the chirp signal.

6. Process according to claim 1, **characterised in that** the pairs of DFT blocks (chirp DFT1; chirp DFT2) are phase-shifted in relation to one another over the time of a duration T/m.

7. Process according to claim 2, **characterised in that** each acquisition of data of the chirp signal captured by the receiver (3) begins at a low frequency value or a high frequency value of frequency variation of the chirp signal and is of a duration equal to the period T of frequency variation of the chirp signal.

8. Process according to one of claims 1 and 2, **characterised in that** a frequency error is determined in the processing unit (39) on the basis of a mean of the two peaks detected above the noise threshold.

9. Process according to claim 8, **characterised in that** a phase error is determined on the basis of the distance between one of the detected peaks and the mean of the frequencies of the detected peaks.

10. Process according to one of claims 1 and 2, **characterised in that** a calculation phase of the phase error and the calculation error begins at the end of an acquisition phase and before the beginning of a successive acquisition.

11. Process according to one of claims 1 and 2, **characterised in that** at the end of the synchronisation phase, the transmitter (2) transmits a data coding chirp signal, wherein the coding is performed in each frequency variation cycle by adding a frequency offset to define a logic state "1" or subtracting a frequency offset to define a logic state "0".

12. Process according to claim 3, **characterised in that** at the end of the synchronisation phase, the transmitter (2) transmits a data coding chirp signal, wherein the coding is performed in each half-cycle of the frequency variation cycle by adding a frequency offset to define a logic state "1" or subtracting a frequency offset to define a logic state "0".

13. Process according to one of claims 1 and 2, **characterised in that** at the end of the synchronisation phase, the transmitter (2) transmits a data coding chirp signal with asymmetric frequency variation slopes in each frequency variation cycle of the chirp signal, wherein a logic state "1" is defined with a positive slope of frequency variation in the first cycle portion, which is different from a negative slope in absolute values in the second portion of the frequency variation cycle.

14. Process according to claim 3, **characterised in that** at the end of the synchronisation phase, the transmitter (2) transmits a data coding chirp signal with asymmetric frequency variation slopes in each half-cycle of the chirp signal, wherein a logic state "1" is defined in a half-cycle by a first positive slope of frequency variation larger than a second negative slope of frequency variation in absolute values, whereas a logic state "0" in a half-cycle of the chirp signal is defined by a first positive slope of frequency variation smaller than a second negative slope of frequency variation in absolute values.

15. Communication system for implementing the communication process according to claim 1,
**characterised in that** it comprises at least one transmitter (2) for transmitting a pseudo-periodic chirp-type signal of period T and at least one receiver (3) to receive the chirp signal, wherein the transmitter comprises a local oscillator (21) of the transmitter to generate a chirp signal to be transmitted and the receiver comprises a local oscillator (34) of the receiver suitable for generating an oscillating signal (So) at constant frequency for the frequency conversion of the received chirp signal by a mixer (33) to supply an intermediate signal (IF) with frequency variation at the image of the captured chirp signal,
**in that** it additionally comprises a low-pass filter (35) followed by a sampler (36) clocked by a timing signal (CK) supplied by the local oscillator (34) of the receiver,
**in that** it additionally comprises a logic unit (37), which comprises an assembly (38) of m pairs of discrete Fourier transform blocks (chirp DFT1; chirp DFT2) arranged for an operation in parallel and phase-shifted in relation to one another, where m is a whole number higher than or equal to 1, wherein a first block of each pair is intended for the acquisition in relation to the positive slope of frequency variation of the chirp signal, whereas a second block of each pair is intended for the acquisition in relation to the negative slope of frequency variation of the chirp signal, and
**in that** the logic unit (37) additionally comprises a processing unit (39) intended to receive the result of each discrete Fourier transform of the pairs of the assembly (38) to determine a frequency and/or a phase error between the transmitter and the receiver.

16. Communication system for implementing the communication process according to claim 2,
**characterised in that** it comprises at least one transmitter (2) for transmitting a pseudo-periodic chirp-type signal of period T and with triangular shape over time for a synchronisation phase, and at least one receiver (3) to receive the chirp signal, wherein the transmitter comprises a local oscillator (21) of the transmitter to generate a chirp signal to be transmitted and the receiver comprises a local oscillator (34) of the receiver suitable for generating an oscillating signal (So) at constant frequency for the frequency conversion of the received chirp signal by a mixer (33) to supply an intermediate signal (IF) with frequency variation at the image of the captured chirp signal,
**in that** it additionally comprises a low-pass filter (35) followed by a sampler (36) clocked by a timing signal (CK) supplied by the local oscillator (34) of the receiver,
**in that** it additionally comprises a logic unit (37), which comprises a pair (38') of discrete Fourier transform DFT blocks (DFT1; DFT2), wherein a first block of the pair is intended for the acquisition in relation to the positive slope of frequency variation of the chirp signal, whereas a second block of the pair is intended for the acquisition in relation to the negative slope of frequency variation of the chirp signal, and
**in that** the logic unit (37) additionally comprises a processing unit (39) intended to receive the result of the discrete Fourier transforms of the blocks of the pair (38') to correct the phase-shift of the oscillating signal (So) generated by the local oscillator (34) to determine a frequency and/or a phase error between the transmitter and the receiver.
